**Europäisches Patentamt**

**European Patent Office**

**Office européen des brevets**

(19)

(11) Veröffentlichungsnummer : **0 397 909 B1**

(12) **EUROPÄISCHE PATENTSCHRIFT**

(45) Veröffentlichungstag der Patentschrift :
22.07.92 Patentblatt 92/30

(51) Int. Cl.⁵ : **B60H 1/24**, G05G 5/04

(21) Anmeldenummer : **89109071.4**

(22) Anmeldetag : **19.05.89**

(54) **Luftverteilungsvorrichtung.**

(43) Veröffentlichungstag der Anmeldung :
**22.11.90 Patentblatt 90/47**

(45) Bekanntmachung des Hinweises auf die
Patenterteilung :
**22.07.92 Patentblatt 92/30**

(84) Benannte Vertragsstaaten :
**DE FR GB IT**

(56) Entgegenhaltungen :
**EP-A- 0 150 020**
**DE-A- 3 835 614**

(73) Patentinhaber : **SIEMENS**
**AKTIENGESELLSCHAFT**
**Wittelsbacherplatz 2**
**W-8000 München 2 (DE)**

(72) Erfinder : **Hildebrand, Reinhard, Dipl.-Ing.(FH)**
**Hauptstrasse 11**
**W-8627 Redwitz (DE)**
Erfinder : **Kusuma, Dkjuanarto-Adi, Dipl.-Ing.**
**Am Sportplatz 20**
**W-8635 Dörfles (DE)**
Erfinder : **Waldmann, Bernd, Dipl.-Ing.(FH)**
**Innerer Ring 40**
**W-8640 Kronach (DE)**

EP 0 397 909 B1

## Beschreibung

Die Erfindung bezieht sich auf eine Luftverteilungsvorrichtung gemäß Oberbegriff des Anspruchs 1; eine derartige Vorrichtung ist durch eine offenkundige Vorbenutzung bekannt. bzw. in der Patentschrift DE-A-38 35 614 beschrieben.

Bei der bekannten, im Armaturenbrett eines Kraftfahrzeuges als Abschluß einer Luftdüse angeordneten Vorrichtung sind in einem Luftführungsgehäuse die Lamellen um eine im wesentlichen parallel zur Armaturenbrettachse verlaufende Schwenkachse derart schwenkbar gelagert, daß die durch die Luftdüse geförderte Luft in ihrer Strömungsrichtung zwischen einer oberen, in den Kopfraum und einer unteren in den Fußraum gerichteten Extremstellung einstellbar ist. Die Einstellung erfolgt durch einen an der Vorderseite eines das Luftführungsgehäuse abschließenden Gitters entlang eines Gittersteges verschiebbaren Verstellhebel, der über eine rückseitige Ritzelstange mit einem Ritzelbogen an der Vorderseite einer Lamelle kämmt, die mit ihrer Rückseite über eine Mitnahmestange mit sämtlichen weiteren Lamellen parallel geschaltet ist. Als Anschlagbegrenzung für die beiden Endstellungen der Lamellen dienen ein oberer und ein unterer Anschlagnocken, an dem als Führung für den Verstellhebel dienenden Gittersteg, wobei je nach Betätigung des Verstellhebels ein mehr oder weniger lautes Anschlaggeräusch entsteht.

Gemäß Aufgabe vorliegender Erfindung soll zur Komfortsteigerung das Anschlaggeräusch in den Endstellungen des Verstellhebels mit einfachen Mitteln derart gedämmt werden, daß es von dem Fahrzeuginsassen nicht mehr gehört bzw. nicht mehr als störend empfunden wird.

Die Lösung dieser Aufgabe gelingt bei einer Luftverteilungsvorrichtung der eingangs genannten Art dadurch, daß zur Anschlagbegrenzung an der Mitnehmerstange jeweils ein jeder Endstellung zugeordnetes federndes Anschlagelement vorgesehen ist. In fertigungstechnisch besonders einfacher und trotzdem im Hinblick auf eine Geräuschdämmung sehr wirksamer Weise ist als Anschlagelement an den beiden Enden der Mitnahmestange jeweils ein federnder Anschlaghebel vorzugsweise einstückig angeformt, der mit seinem freien Ende jeweils bei Erreichen einer Endstellung an das Luftführungsgehäuse mittelbar oder unmittelbar zur Anlage kommt.

Dadurch, daß einerseits die Anschlagbegrenzungen an die armaturenbrettabgewandte Rückseite der Verstellvorrichtung gelegt sind und andererseits durch die Betätigungsübertragung über die Lamellen und die federnden Anschlaghebel ein Teil der Bewegungsenergie vernichtet und die Kraft, mit der der Betätigungsknopf an den Anschlag anfährt, wesentlich verringert werden könnte, lassen sich harte Anschlaggehäuse überhaupt vermeiden.

Die Erfindung wird im folgenden anhand eines schematisch dargestellten Ausführungsbeispiels für eine Luftverteilvorrichtung im Armaturenbrett eines Kraftfahrzeuges näher erläutert.

Am Ende einer hier nicht näher dargestellten Luftdüse eines Luftführungskanals für die Belüftungseinrichtung eines Kraftfahrzeuges ist ein Luftführungsgehäuse 1 angeordnet, das an seiner fahrzeugraumseitigen Öffnung senkrecht verlaufende Gitterstege 8 aufweist. Einer dieser Gitterstege 8 dient gleichzeitig zur Führung eines entlang des Gittersteges bewegbaren Verstellhebels 2 zur Betätigung der rückseitig des Verstellhebels 2 schwenkbar angeordneten Lamellen 4,5,6,7. Die direkte Übertragung der Verstellbewegung des Verstellhebels 2 auf die Lamellen 4,5,6,7 erfolgt durch eine an der Rückseite des Verstellhebels 2 angeformte Ritzelstange 21, die mit einem an der Vorderkante der Lamelle 5 angeformten Ritzelbogen kämmt. Die lineare Verstellbewegung des Verstellhebels 2 wird derart auf eine Schwenkbewegung der Lamelle 5 und durch eine an deren Rückseite angekoppelte, in gleicher Weise mit den Rückseiten der übrigen Lamellen 4,6,7 verbundene Mitnahmestange 3 übertragen.

Im dargestellten Ausführungsbeispiel sind mit ausgezogener Kontur die Endstellung für eine in den Kopfraum gerichtete Strömungsrichtung und mit strichpunktierter Kontur die Endstellung für eine in den Fußraum gerichtete Strömungsrichtung eingezeichnet.

Zur geräuschdämmenden Anschlagbegrenzung zwischen den beiden vorbeschriebenen Endstellungen dienen einstückig an die Mitnahmestange 3 angespritzte federnde Anschlaghebel 31 bzw .32, die in den Endstellungen gegen die obere bzw. untere Wandung des Luftführungsgehäuses 1 mit ihren freien Enden zur Anlage kommen.

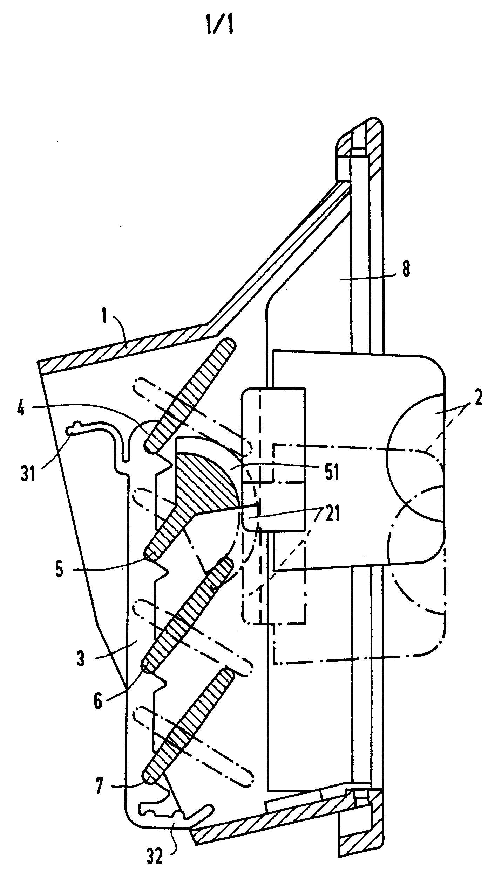

## Patentansprüche

1. Luftverteilungsvorrichtung, insbesondere für Düsenöffnungen von Kraftfahrzeug-Belüftungseinrichtungen, mit in einem Luftführungsgehäuse (1) durch einen Verstellhebel (2) zwischen zwei anschlagbegrenzten Endstellungen bewegbaren, über eine bei einer Verstellung mitbewegten Mitnahmestange (3) untereinander verbundenen Lamellen (4-7), **dadurch gekennzeichnet**, daß zur Anschlagbegrenzung an der Mitnahmestan-

2

ge (3) jeweils ein jeder Endstellung zugeordnetes federndes Anschlagelement (Anschlaghebel 31,32) vorgesehen ist.

2. Luftverteilungsvorrichtung nach Anspruch 1, **dadurch gekennzeichnet**, daß als Anschlagelement an den beiden Enden der Mitnahmestange (3) jeweils ein federnder Anschlaghebel (31 bzw .32) vorgesehen ist, der mit seinem freien Ende jeweils bei Erreichen einer Endstellung an das Luftführungsgehäuse (1) mittelbar oder unmittelbar zur Anlage kommt.

3. Luftverteilungsvorrichtung nach Anspruch 1 und/oder 2, **dadurch gekennzeichnet**, daß das Anschlagelement (Anschlaghebel 31 bzw .32) einstückiges Bestandteil der, insbesondere aus Kunststoff gespritzten, Mitnahmestange (3) ist.

## Claims

1. An air distribution device, in particular for nozzle openings of motor vehicle-ventilating devices, with blades (4-7), connected below each other by way of a pulling rod (3), moved when there is an adjustment, said blades being movable in an air conduction housing (1) between two end positions defined by limit stops, by means of an adjusting lever (2), **characterised in that** for defining the limit stop on the pulling rod (3) there is provided a resilient limit stop element (limit stop lever 31,32) allocated to each respective end position.

2. An air distribution device according to claim 1, **characterised in that** as limit stop element at both ends of the pulling rod (3) there is provided in each case a resilient limit stop lever (31 or 32), which comes to rest directly or indirectly on the air conduction housing (1) with its free end in each case when reaching an end position.

3. An air distribution device according to claim 1 and/or claim 2, **characterised in that** the limit stop element (limit stop lever 31 or 32) is an integral part of the pulling rod (3), which is made particularly of injection moulded plastics.

## Revendications

1. Répartiteur d'air, notamment pour des orifices de buse de dispositifs de ventilation de véhicules automobiles, comprenant des lamelles (4 à 7) mobiles, entre deux positions d'extrémité délimitées par butée dans un déflecteur d'air (1), sous l'action d'un levier de réglage (2) et reliées entre elles par une tige d'entraînement (3) déplacée lors d'un réglage, **caractérisé en ce que**, pour délimiter la venue en butée, il est prévu, sur la tige d'entraînement (3), des éléments de butée (leviers de butée 31, 32) élastiques, associés respectivement à chaque position d'extrémité.

2. Répartiteur d'air suivant la revendication 1, **caractérisé en ce qu**'il est prévu, comme élément de butée aux deux extrémités de la tige d'entraînement (3), un levier de butée (31 et 32) élastique, qui vient en contact directement ou indirectement, par son extrémité libre, avec le déflecteur d'air (1) lorsqu'une position d'extrémité est atteinte.

3. Répartiteur d'air suivant la revendication 1 et/ou 2, **caractérisé en ce que** l'élément de butée (levier de butée 31 et 32) est une pièce constitutive de la tige d'entraînement (3), d'un seul tenant avec celle-ci, notamment obtenue par moulage de matière plastique par injection.

1/1